# EUROPEAN PATENT APPLICATION

(11) **EP 4 844 501 A1**
(43) Date of publication of application: **25.11.2026**
(21) Application number: 25221464.8
(22) Date of filing: 08.12.2025
(51) Int. Cl.: G05B 13/02, B60Q 1/14, B60Q 1/08, G01S 13/86

(54) **FUZZY COMPUTATION PROCEDURE APPLICABLE TO A HEADLIGHT VARIATION CONTROL SYSTEM**

(30) Priority: 21.05.2025 TW 114119130
(71) Applicant: Wistron Corporation, New Taipei City 22181 (TW)
(72) Inventor: CAI, Cheng Yang, 22181 New Taipei City (TW); CHIU, Chih Hao, 22181 New Taipei City (TW); HENG, Shang Jyun, 22181 New Taipei City (TW); CHOU, Hao Gong, 22181 New Taipei City (TW)
(74) Representative: Viering, Jentschura & Partner mbB Patent- und Rechtsanwälte

(57) **Abstract**

A fuzzy computation procedure applicable to a headlight variation control system (1) includes: defining a plurality of fuzzy sets; defining a plurality of membership functions corresponding to the fuzzy sets; performing fuzzification on a relative speed (S), a relative distance (D), and a relative angle (A) based on the membership functions to obtain a plurality of membership values corresponding to the membership functions; defining a fuzzy rule; calculating a plurality of fuzzy output values based on the relative speed (S), the relative distance (D), the relative angle (A), the fuzzy rule, and the membership values; performing defuzzification on the fuzzy output values based on a defuzzification formula to obtain a light-on adjustment time and a light-off adjustment frame count; obtaining a final light-on time based on a current light-on time and the light-on adjustment time; and obtaining a final light-off frame count based on a current light-off frame count and the light-off adjustment frame count.

## Description

### BACKGROUND

### Technical Field

The instant disclosure relates to headlight control technologies, specifically a fuzzy computation procedure applicable to a headlight variation control system.

### Related Art

Conventional Adaptive Driving Beam (ADB) systems primarily rely on detection results from sensors such as light sensors, radars, or cameras to adjust headlight beams. However, conventional ADB systems suffer from a slow response time and insufficient beam adjustment precision. For example, when an oncoming vehicle approaches, the beam intensity cannot be reduced in time by a conventional ADB system, which may result in glare discomfort for the oncoming vehicle driver and increase the risk of traffic accidents.

Moreover, conventional ADB systems typically adopt a gradual beam intensity adjustment strategy. Although the gradual adjustment strategy provides a smooth visual transition, it cannot promptly respond to changes in the driving environment. Particularly under dynamic traffic conditions, the beam adjustment precision and responsiveness of conventional ADB systems remain insufficient, thereby negatively affecting driving safety and comfort.

Additionally, most conventional ADB systems perform beam adjustment based on a single variable, such as inter-vehicle distance. The capability of conventional ADB systems to process multiple variables, such as the speed, distance, and angle of a forward object, is limited. Therefore, conventional ADB systems are not suitable for handling complex road conditions.

In view of the foregoing problems, an improved headlight control technology is required to enhance beam adjustment precision, responsiveness, and adaptability, so as to further ensure safety and comfort during nighttime driving.

### SUMMARY

In some embodiments, a headlight variation control system comprises a detection device, a first control unit, and a first driving unit. The detection device is configured to acquire target object information. The first control unit is configured to perform a fuzzy computation procedure based on the target object information to generate a first light adjustment instruction. The first driving unit is configured to control a first lighting module based on the first light adjustment instruction.

In some embodiments, the target object information comprises a relative speed, a relative distance, and a relative angle of a target object. The detection device comprises a camera, at least one radar, and a computing unit. The camera is configured to capture an image of the target object to provide first information. The at least one radar is configured to detect the target object to provide second information. The computing unit is configured to calculate the relative speed, the relative distance, and the relative angle of the target object based on the first information and the second information.

In some embodiments, the first light adjustment instruction comprises a final light-on time and a final light-off frame count. The fuzzy computation procedure comprises: defining a plurality of fuzzy sets; defining a plurality of membership functions corresponding to the fuzzy sets; performing fuzzification on the relative speed, the relative distance, and the relative angle based on the membership functions to obtain a plurality of membership values corresponding to the membership functions; defining a fuzzy rule; calculating a plurality of fuzzy output values based on the relative speed, the relative distance, the relative angle, the fuzzy rule, and the membership values; performing defuzzification on the fuzzy output values based on defuzzification formulas to obtain a light-on adjustment time and a light-off adjustment frame count; obtaining the final light-on time based on a current light-on time and the light-on adjustment time; and obtaining the final light-off frame count based on a current light-off frame count and the light-off adjustment frame count.

In some embodiments, the fuzzy sets comprise a speed set, a distance set, and an angle set. The speed set comprises a high-speed set, a medium-speed set, and a low-speed set. The distance set comprises a far-distance set, a medium-distance set, and a near-distance set. The angle set comprises a large-angle set, a medium-angle set, and a small-angle set. Each of the membership function is a triangular membership function or a linear membership function.

In some embodiments, the step of defining the membership functions corresponding to the fuzzy sets comprises: defining the membership function corresponding to the high-speed set as a linear membership function; defining the membership function corresponding to the medium-speed set as a triangular membership function; defining the membership function corresponding to the low-speed set as a linear membership function; defining the membership function corresponding to the far-distance set as a linear membership function; defining the membership function corresponding to the medium-distance set as a triangular membership function; defining the membership function corresponding to the near-distance set as a linear membership function; defining the membership function corresponding to the large-angle set as a linear membership function; defining the membership function corresponding to the medium-angle set as a triangular membership function; and defining the membership function corresponding to the small-angle set as a linear membership function.

In some embodiments, the membership values comprise a plurality of speed membership values, a plurality of distance membership values, and a plurality of angle membership values. The step of performing fuzzification on the relative speed, the relative distance, and the relative angle based on the membership functions to obtain the membership values corresponding to the membership functions comprises: substituting the value of the relative speed into the membership functions corresponding to the high-speed set, the medium-speed set, and the low-speed set to obtain the speed membership values; substituting the value of the relative distance into the membership functions corresponding to the far-distance set, the medium-distance set, and the near-distance set to obtain the distance membership values; and substituting the value of the relative angle into the membership functions corresponding to the large-angle set, the medium-angle set, and the small-angle set to obtain the angle membership values.

In some embodiments, the step of defining the fuzzy rule comprises: defining a speed parameter, wherein the speed parameter is divided into a plurality of speed levels, the plurality of speed levels comprises a high-speed level, a medium-speed level, and a low-speed level, the high-speed level corresponds to the high-speed set, the medium-speed level corresponds to the medium-speed set, and the low-speed level corresponds to the low-speed set; defining a distance parameter, wherein the distance parameter is divided into a plurality of distance levels, the plurality of distance levels comprises a far-distance level, a medium-distance level, and a near-distance level, the far-distance level corresponds to the far-distance set, the medium-distance level corresponds to the medium-distance set, and the near-distance level corresponds to the near-distance set; defining an angle parameter, wherein the angle parameter is divided into a plurality of angle levels, the plurality of angle levels comprises a large-angle level, a medium-angle level, and a small-angle level, the large-angle level corresponds to the large-angle set, the medium-angle level corresponds to the medium-angle set, and the small-angle level corresponds to the small-angle set; and defining an output adjustment degree based on the speed parameter, the distance parameter, and the angle parameter, wherein the output adjustment degree is divided into a plurality of output adjustment levels based on combinations of each of the speed levels, each of the distance levels, and each of the angle levels.

In some embodiments, the step of calculating the fuzzy output values based on the relative speed, the relative distance, the relative angle, the fuzzy rule, and the membership values comprises: determining the output adjustment levels applicable to a target object based on the relative speed, the relative distance, and the relative angle; and calculating the fuzzy output values based on the output adjustment levels applicable to the target object and the membership values.

In some embodiments, the step of calculating the fuzzy output values based on each of the output adjustment levels applicable to the target object and the membership values comprises: selecting the speed membership value corresponding to the high-speed set, the medium-speed set, or the low-speed set as a first comparison membership value based on each of the speed levels corresponding to a corresponding one of the output adjustment levels applicable to the target object; selecting the distance membership value corresponding to the far-distance set, the medium-distance set, or the near-distance set as a second comparison membership value based on each of the distance levels corresponding to a corresponding one of the output adjustment levels applicable to the target object; selecting the angle membership value corresponding to the large-angle set, the medium-angle set, or the small-angle set as a third comparison membership value based on each of the angle levels corresponding to a corresponding one of the output adjustment levels applicable to the target object; and taking a minimum value among the first comparison membership value, the second comparison membership value, and the third comparison membership value as the fuzzy output value.

In some embodiments, the i-th fuzzy output value is *µᵢ*, a user-defined time interval variation value corresponding to the i-th fuzzy output value is *yᵢ*, the light-on adjustment time is *T,* the light-off adjustment frame count is *F*, and the defuzzification formulas are $T = \frac{{\sum }_{i} {μ}_{i} ⋅ {y}_{i}}{{\sum }_{i} {μ}_{i}}$ and $F = \frac{{\sum }_{i} {μ}_{i} ⋅ {y}_{i}}{{\sum }_{i} {μ}_{i}}$.

In some embodiments, the step of obtaining the final light-on time based on the current light-on time and the light-on adjustment time comprises adding the current light-on time to the light-on adjustment time to obtain the final light-on time.

**In** some embodiments, the step of obtaining the final light-off frame count based on the current light-off frame count and the light-off adjustment frame count comprises adding the current light-off frame count to the light-off adjustment frame count to obtain the final light-off frame count.

In some embodiments, the fuzzy computation procedure further comprises: when the final light-off frame count is a non-integer value, rounding the final light-off frame count to the nearest integer.

In some embodiments, the target object information further comprises a relative position of the target object, and the computing unit is further configured to calculate the relative position of the target object based on the first information and the second information. The first light adjustment instruction further comprises the relative position.

In some embodiments, the first driving unit is a matrix driver. The first lighting module is an LED matrix. The first driving unit is further configured to control switching of a plurality of LEDs in the first lighting module corresponding to the relative position based on the first light adjustment instruction.

In some embodiments, the headlight variation control system further comprises a second control unit and a second driving unit. The second control unit is configured to perform the fuzzy computation procedure based on the relative speed, the relative distance, and the relative angle to generate a second light adjustment instruction. The second driving unit is configured to control a second lighting module based on the second light adjustment instruction. The first lighting module is a left high-beam headlight, and the second lighting module is a right high-beam headlight.

In some embodiments, a fuzzy computation procedure applicable to a headlight variation control system comprises: defining a plurality of fuzzy sets; defining a plurality of membership functions corresponding to the fuzzy sets; performing fuzzification on a relative speed, a relative distance, and a relative angle based on the membership functions to obtain a plurality of membership values corresponding to the membership functions; defining a fuzzy rule; calculating a plurality of fuzzy output values based on the relative speed, the relative distance, the relative angle, the fuzzy rule, and the membership values; performing defuzzification on the fuzzy output values based on a defuzzification formula to obtain a light-on adjustment time and a light-off adjustment frame count; obtaining a final light-on time based on a current light-on time and the light-on adjustment time; and obtaining a final light-off frame count based on a current light-off frame count and the light-off adjustment frame count.

The following will describe the detailed features and advantages of the instant disclosure in detail in the detailed description. The content of the description is sufficient for any person skilled in the art to comprehend the technical context of the instant disclosure and to implement it accordingly. According to the content, claims and drawings disclosed in the instant specification, any person skilled in the art can readily understand the goals and advantages of the instant disclosure.

### BRIEF DESCRIPTION OF THE DRAWINGS

The disclosure will become more fully understood from the detailed description given herein below for illustration only, and thus not limitative of the disclosure, wherein:
FIG. 1 illustrates a schematic diagram of a headlight variation control system according to an embodiment.
FIG. 2 illustrates a schematic diagram of sampling times of a camera and a radar according to an embodiment.
FIG. 3 illustrates a flowchart of a fuzzy computation procedure according to an embodiment.
FIG. 4 illustrates a schematic diagram of a triangular membership function according to an embodiment.
FIG. 5 illustrates a schematic diagram of a linear membership function according to an embodiment.
FIG. 6 illustrates a schematic diagram of membership functions corresponding to a speed set according to an embodiment.
FIG. 7 illustrates a schematic diagram of membership functions corresponding to a distance set according to an embodiment.
FIG. 8 illustrates a schematic diagram of membership functions corresponding to an angle set according to an embodiment.
FIG. 9 illustrates a waveform diagram of reaction times of a conventional ADB system and the headlight variation control system according to an embodiment.
FIG. 10 illustrates a waveform diagram of reaction times of the conventional ADB system and the headlight variation control system with different interval numbers according to an embodiment.
FIG. 11 illustrates a front schematic diagram of a projector according to an embodiment.
FIG. 12 illustrates a rear schematic diagram of the projector according to an embodiment.
FIG. 13 illustrates a schematic diagram of an installation device according to an embodiment.
FIG. 14 illustrates a schematic diagram of a first lighting module according to an embodiment.
FIG. 15 illustrates a schematic diagram in which the projector and the first lighting module are installed on the installation device according to an embodiment.
FIG. 16 illustrates a schematic diagram of the headlight variation control system according to another embodiment.
FIG. 17 illustrates a schematic diagram of the first lighting module and a second lighting module according to an embodiment.

### DETAILED DESCRIPTION

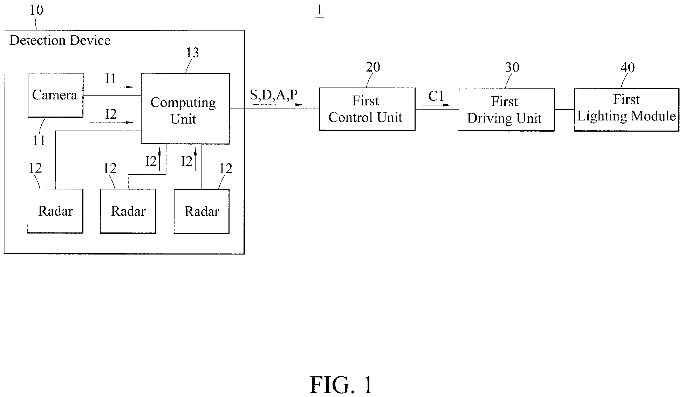

FIG. 1 illustrates a schematic diagram of a headlight variation control system 1 according to an embodiment. Please refer to FIG. 1. The headlight variation control system 1 comprises a detection device 10, a first control unit 20, and a first driving unit 30.

The detection device 10 is configured to acquire target object information. The target object information comprises a relative speed S, a relative distance D, and a relative angle A of a target object. The detection device 10 comprises a camera 11, at least one radar 12, and a computing unit 13. The camera 11 is configured to capture an image of the target object to provide first information I1. The at least one radar 12 is configured to detect the target object to provide second information I2. The computing unit 13 is configured to calculate the relative speed S, the relative distance D, and the relative angle A of the target object based on the first information I1 and the second information I2.

In some embodiments, the target object may be but not limited to a vehicle, a headlight, a pedestrian, or a traffic sign.

In some embodiments, the camera 11 may be but not limited to a wide-angle camera. In some embodiments, the camera 11 is configured to capture the target object located ahead in the present lane.

In some embodiments, the at least one radar 12 comprises a front radar, a front left wide-angle radar, and a front right wide-angle radar. The front radar is configured to detect distance and speed of the target object appeared ahead in the present lane. The front left wide-angle radar is configured to detect distance and speed of the target object appeared front left in the left lane. The front right wide-angle radar is configured to detect distance and speed of the target object appeared front right in the right lane. In FIG. 1, the detection device 10 comprises three radars 12, but the number of radars 12 comprised in the detection device 10 is not limited thereto.

In some embodiments, the radar 12 can operate stably under adverse weather such as fog, rain, snow or under darkness and measure the distance and the speed of the target object accurately. However, in some embodiments, the radar 12 may have difficulty identifying details and shapes of the target object and cannot provide abundant environmental information or distinguish between different types of the target object (e.g., pedestrians, bicycles, or vehicles). In contrast, although the camera 11 is less accurate than the radar 12 in measuring the distance and the speed of the target object, it has a strong recognition capability for the target object and can effectively distinguish different types of the target object. Therefore, in some embodiments, in order to integrate the advantages of the radar 12 and the camera 11 and compensate for their respective shortcomings, thereby improving the sensing accuracy of the headlight variation control system 1 and enhancing its reliability, the computing unit 13 is required to combine the first information I1 obtained from the camera 11 and the second information I2 obtained from the at least one radar 12, and to calculate the relative speed S, the relative distance D, and the relative angle A of the target object based on the combined result.

In some embodiments, a method by which the computing unit 13 combines the first information I1 and the second information I2 comprises synchronizing the time of the first information I1 and the second information I2, and synchronizing the space of the first information I1 and the second information I2.

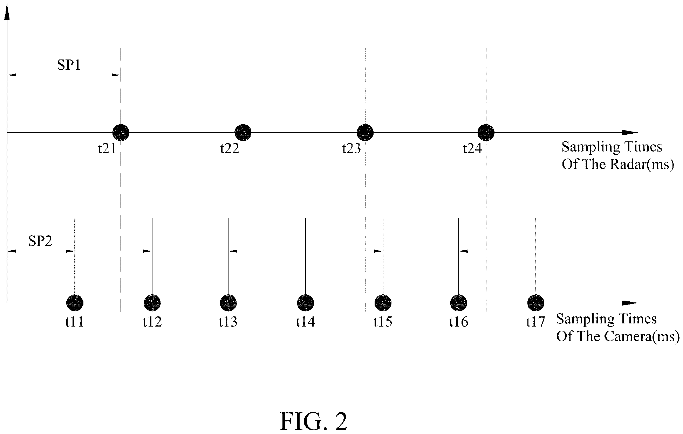

In some embodiments, synchronizing the time of the first information I1 and the second information I2 refers to synchronizing the data of the first information I1 and the second information I2 at the same time. In some embodiments, the computing unit 13 selects the data of the sampling time of the camera 11 that is closest to the sampling time of the radar 12 and matches it with the data of the sampling time of the radar 12, thereby achieving time synchronization of the first information I1 and the second information I2. FIG. 2 illustrates a schematic diagram of sampling times of the camera 11 and the radar 12 according to an embodiment. Please refer to FIG. 2. In some embodiments, the sampling period SP1 of the radar 12 is greater than the sampling period SP2 of the camera 11. In FIG. 2, the radar 12 performs sampling at four time points (i.e., time point t21, time point t22, time point t23, and time point t24), and the camera 11 performs sampling at seven time points (i.e., time point t11, time point t12, time point t13, time point t14, time point t15, time point t16, and time point t17). The computing unit 13 selects the data of four sampling time points of the camera 11 that are closest to the four sampling time points of the radar 12 and matches them with the data of the four sampling times of the radar 12.

Specifically, the time point t21 is between the time point t11 and the time point t12. However, since the time point t21 is closer to the time point t12, the computing unit 13 selects the data of the camera 11 at the time point t12 and matches it with the data of the radar 12 at the time point t21. The time point t22 is between the time point t13 and the time point t14. However, since the time point t22 is closer to the time point t13, the computing unit 13 selects the data of the camera 11 at the time point t13 and matches it with the data of the radar 12 at the time point t22. The time point t23 is between the time point t14 and the time point t15. However, since the time point t23 is closer to the time point t15, the computing unit 13 selects the data of the camera 11 at the time point t15 and matches it with the data of the radar 12 at the time point t23. The time point t24 is between the time point t16 and the time point t17. However, since the time point t24 is closer to the time point t16, the computing unit 13 selects the data of the camera 11 at the time point t16 and matches it with the data of the radar 12 at the time point t24.

In some embodiments, the sampling period SP1 of the radar 12 is 66 milliseconds (ms), and the sampling period SP2 of the camera 11 is 24 ms, however, the present disclosure is not limited to these specific ranges.

In some embodiments, synchronizing the space of the first information I1 and the second information I2 refers to matching the target object detected by the radar 12 with the target object captured by the camera 11. In some embodiments, the computing unit 13 performs coordinate transformation to unify the reference systems of the camera 11 and the radar 12, so that the target object detected by the radar 12 can be accurately mapped to the target object captured by the camera 11.

In some embodiments, the detection device 10 may be but not limited to an Advanced Driver Assistance System (ADAS) module. In some embodiments, the computing unit 13 may be but not limited to a High-Performance Computing (HPC) central. In some embodiments, the camera 11 may be but not limited to being connected to the computing unit 13 via GMSL2 (Gigabit Multimedia Serial Link 2). In some embodiments, the radar 12 may be but not limited to being connected to the computing unit 13 via CAN-FD (Controller Area Network Flexible Data-Rate) or Ethernet.

The first control unit 20 is configured to perform a fuzzy computation procedure based on the relative speed S, the relative distance D, and the relative angle A to obtain a first light adjustment instruction C1.

In some embodiments, the first control unit 20 may be but not limited to a light Electronic Control Unit (Light ECU).

In some embodiments, the first light adjustment instruction C1 comprises a final light-on time and a final light-off frame count.

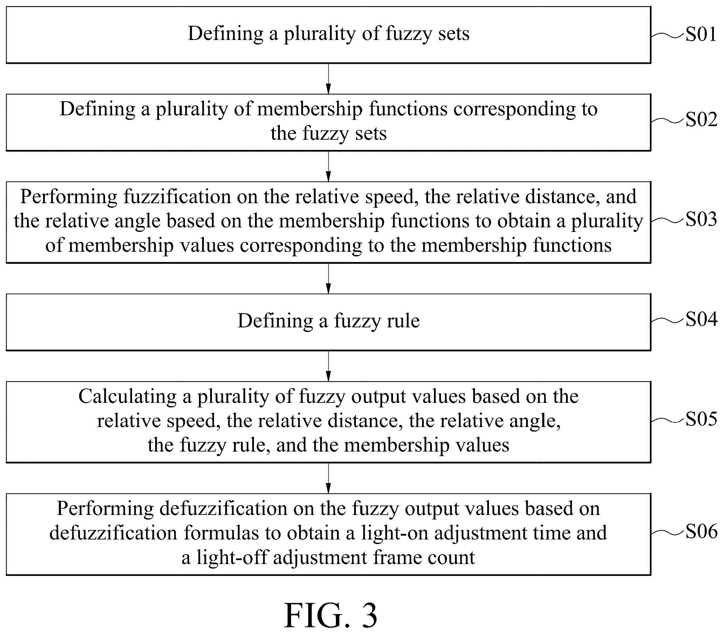

FIG. 3 illustrates a flowchart of the fuzzy computation procedure according to an embodiment. Please refer to FIG. 3. First, the first control unit 20 defines a plurality of fuzzy sets (step S01). In some embodiments, the fuzzy sets are categorized into a speed set, a distance set, and an angle set based on the nature of the input data, namely the relative speed S, the relative distance D, and the relative angle A. In some embodiments, the speed set, the distance set, and the angle set are further divided into a plurality of intervals based on a configurable number of intervals. It is particularly noted herein that a greater number of intervals means a greater computational load. However, the advantage of fuzzy logic control lies not in numerical precision, but in approximate range-based control. If the number of intervals is too large, the fuzzy control effect of the headlight variation control system 1 may be weakened, causing the system to become overly sensitive and unstable. Furthermore, excessive computation may increase the processing burden on the first control unit 20. Therefore, in some embodiments, the number of intervals is from 3 to 5. In some preferable embodiments, the number of intervals is 3.

In some embodiments, when the number of intervals is 3, the speed set is divided into a high-speed set, a medium-speed set, and a low-speed set; the distance set is divided into a far-distance set, a medium-distance set, and a near-distance set; and the angle set is divided into a large-angle set, a medium-angle set, and a small-angle set. In some embodiments, each of the intervals into which the speed set, the distance set, and the angle set are divided based on the number of intervals may have a user-defined range. In some embodiments, the high-speed set is defined as 90 km/h to 120 km/h, the medium-speed set is defined as 60 km/h to 90 km/h, and the low-speed set is defined as below 60 km/h, however, the present disclosure is not limited to these specific ranges. In some embodiments, the far-distance set is defined as 70 meters (m) to 90 m, the medium-distance set is defined as 40 m to 70 m, and the near-distance set is defined as below 40 m, however, the present disclosure is not limited to these specific ranges. In some embodiments, the large-angle set is defined as 150° to 180°, the medium-angle set is defined as 120° to 150°, and the small-angle set is defined as 90° to 120°, however, the present disclosure is not limited to these specific ranges.

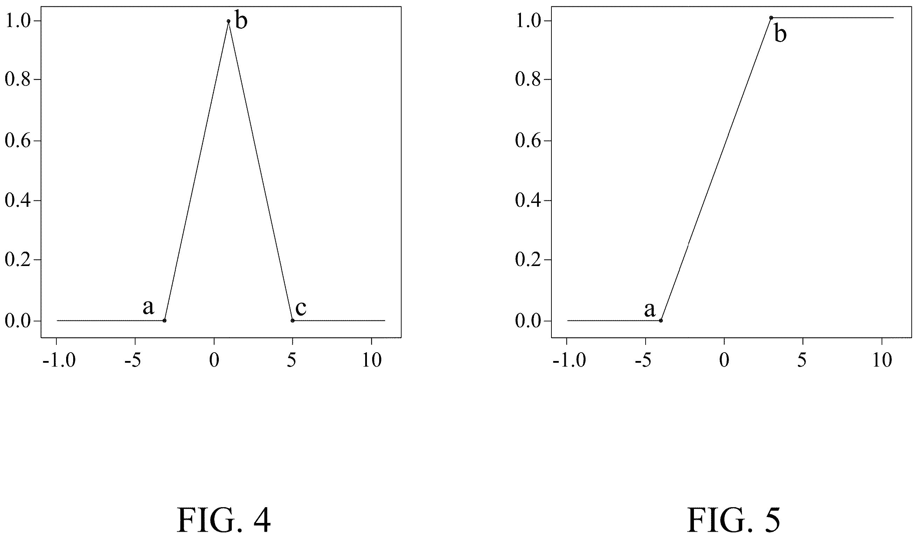

Next, the first control unit 20 defines a plurality of membership functions corresponding to the fuzzy sets (step S02). In some embodiments, each of the membership functions is a triangular membership function or a linear membership function. FIG. 4 illustrates a schematic diagram of the triangular membership function *µ*(*x*; *a, b, c*) according to an embodiment. FIG. 5 illustrates a schematic diagram of the linear membership function *µ*(*x*; *a, b*) according to an embodiment. Please refer to FIG. 4 and FIG. 5. The triangular membership function *µ*(*x*; *a, b, c*) shown in FIG. 4 is expressed as Equation 1.
$μ \left(x; a; b; c\right) = \left\{\begin{matrix}0 , & if x \leq a or x \geq c \\ \frac{x - a}{b - a} , & if a < x \leq b \\ \frac{c - x}{c - b} , & if b < x < c\end{matrix}\right.$ (Equation 1)

In Equation 1, x is an input value. a is a left endpoint at which the triangular membership function *µ*(*x*; *a, b, c*) starts. b is a center point at which the triangular membership function *µ*(*x*; *a, b, c*) reaches the maximum membership value of 1. c is a right endpoint at which the triangular membership function *µ*(*x*; *a, b, c*) ends.

The linear membership function *µ*(*x*; *a, b*) shown in FIG. 5 is expressed as Equation 2.
$μ \left(x; a; b\right) = \left\{\begin{matrix}0 , & if x \leq a \\ \frac{x - a}{b - a} , & if a < x < b \\ 1 , & if x \geq b\end{matrix}\right.$ (Equation 2)

In Equation 2, *x* is an input value. *a* is a left endpoint at which the linear membership function *µ*(*x*; *a, b*) starts or ends. *b* is a right endpoint at which the linear membership function *µ*(*x*; *a, b*) ends or starts.

In some embodiments, the linear membership function *µ*(*x*; *a, b*) is expressed as Equation 3.
$μ \left(x; a; b\right) = \left\{\begin{matrix}1 , & if x \leq a \\ \frac{b - x}{b - a} , & if a < x < b \\ 0 , & if x \geq b\end{matrix}\right.$ (Equation 3)

According to Equation 2 and Equation 3, the linear membership function *µ*(*x*; *a, b*), when *x* is between point *a* and point *b,* either increases from the minimum membership value 0 to the maximum membership value 1 at a fixed slope, or decreases from the maximum membership value 1 to the minimum membership value 0 at a fixed slope.

In some embodiments, the first control unit 20 defines the membership function corresponding to the high-speed set as a linear membership function. When the high-speed set is defined as 90 km/h to 120 km/h as described above, the membership function *µSF*(*x*) corresponding to the high-speed set is expressed as Equation 4.
$μSF \left(x\right) = \left\{\begin{matrix}0 , & if x < 90 \\ \frac{120 - x}{120 - 90} , & if 90 \leq x \leq 120 \\ 1 , & if x \geq 120\end{matrix}\right.$ (Equation 4)

In some embodiments, the first control unit 20 defines the membership function corresponding to the medium-speed set as a triangular membership function. When the medium-speed set is defined as 60 km/h to 90 km/h as described above, the membership function *µSM*(*x*) corresponding to the medium-speed set is expressed as Equation 5. $μSM \left(x\right) = \left\{\begin{matrix}0 , & if x \leq 60 \\ \frac{x - 60}{90 - 60} , & if 60 < x \leq 90 \\ \frac{120 - x}{90 - 60} , & if 60 < x < 90 \\ 0 , & if x \geq 120\end{matrix}\right.$ (Equation 5)

In some embodiments, the first control unit 20 defines the membership function corresponding to the low-speed set as a linear membership function. When the low-speed set is defined as below 60 km/h as described above, the membership function *µSS*(*x*) corresponding to the low-speed set is expressed as Equation 6.$μSS \left(x\right) = \left\{\begin{matrix}1 , & if x \leq 0 \\ \frac{90 - x}{90 - 60} , & if 60 < x < 90 \\ 0 & if x \geq 90\end{matrix}\right.$ (Equation 6)

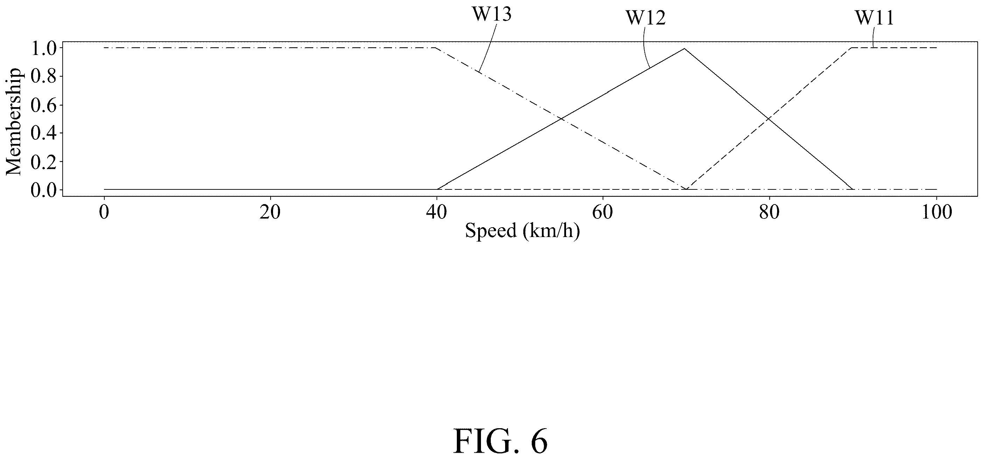

FIG. 6 illustrates a schematic diagram of the membership functions corresponding to the speed set according to an embodiment. Please refer to FIG. 6. In FIG. 6, the waveform W11 is the membership function *µSF*(*x*) corresponding to the high-speed set, as shown in Equation 4. The waveform W12 is the membership function *µSM*(*x*) corresponding to the medium-speed set, as shown in Equation 5. The waveform W13 is the membership function *µSS*(*x*) corresponding to the low-speed set, as shown in Equation 6.

In some embodiments, the first control unit 20 defines the membership function corresponding to the far-distance set as a linear membership function. When the far-distance set is defined as 70 m to 90 m as described above, the membership function *µDFr*(*x*) corresponding to the far-distance set is expressed as Equation 7.$μDFr \left(x\right) = \left\{\begin{matrix}1 , & if x \geq 90 \\ \frac{x - 70}{90 - 70} , & if 70 < x \leq 90 \\ 0 , & if x \leq 70\end{matrix}\right.$ (Equation 7)

In some embodiments, the first control unit 20 defines the membership function corresponding to the medium-distance set as a triangular membership function. When the medium-distance set is defined as 40 m to 70 m as described above, the membership function *µDMr*(*x*) corresponding to the medium-distance set is expressed as Equation 8. $μDMr \left(x\right) = \left\{\begin{matrix}0 , & if x \leq 40 \\ \frac{x - 40}{70 - 40} , & if 40 < x < 70 \\ \frac{90 - x}{90 - 70} , & if 70 \leq x < 90 \\ 0 , & if x \geq 90\end{matrix}\right.$ (Equation 8)

In some embodiments, the first control unit 20 defines the membership function corresponding to the near-distance set as a linear membership function. When the near-distance set is defined as below 40 m as described above, the membership function *µDC*(*x*) corresponding to the near-distance set is expressed as Equation 9.$μDC \left(x\right) = \left\{\begin{matrix}0 , & if x \geq 70 \\ \frac{70 - x}{70 - 40} , & if 40 < x < 70 \\ 1 , & if x \leq 40\end{matrix}\right.$ (Equation 9)

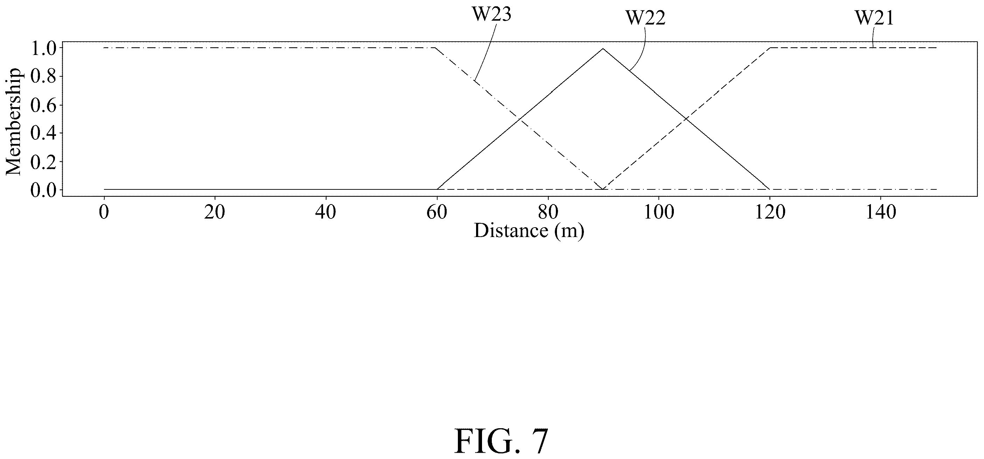

FIG. 7 illustrates a schematic diagram of the membership functions corresponding to the distance set according to an embodiment. Please refer to FIG. 7. In FIG. 7, the waveform W21 is the membership function *µDFr*(*x*) corresponding to the far-distance set, as shown in Equation 7. The waveform W22 is the membership function *µDMr*(*x*) corresponding to the medium-distance set, as shown in Equation 8. The waveform W23 is the membership function *µDC*(*x*) corresponding to the near-distance set, as shown in Equation 9.

In some embodiments, the first control unit 20 defines the membership function corresponding to the large-angle set as a linear membership function. When the large-angle set is defined as 150° to 180° as described above, the membership function *µAW*(*x*) corresponding to the large-angle set is expressed as Equation 10.$μAW \left(x\right) = \left\{\begin{matrix}0 , & if x \geq 180 \\ \frac{180 - x}{180 - 150} , & if 150 \leq x < 180 \\ 1 , & if x < 150\end{matrix}\right.$ (Equation 10)

In some embodiments, the first control unit 20 defines the membership function corresponding to the medium-angle set as a triangular membership function. When the medium-angle set is defined as 120° to 150° as described above, the membership function *µAI*(*x*) corresponding to the medium-angle set is expressed as Equation 11. $μAI \left(x\right) = \left\{\begin{matrix}0 , & if x \leq 120 \\ \frac{x - 120}{150 - 120} , & if 120 < x < 150 \\ \frac{180 - x}{150 - 120} , & if 150 \leq x < 180 \\ 0 , & if x \geq 180\end{matrix}\right.$ (Equation 11)

In some embodiments, the first control unit 20 defines the membership function corresponding to the small-angle set as a linear membership function. When the small-angle set is defined as 90° to 120° as described above, the membership function *µAN*(*x*) corresponding to the small-angle set is expressed as Equation 12.$μAN \left(x\right) = \left\{\begin{matrix}1 , & if x \leq 90 \\ \frac{120 - x}{120 - 90} , & if 90 < x < 120 \\ 0 , & if x \geq 120\end{matrix}\right.$ (Equation 12)

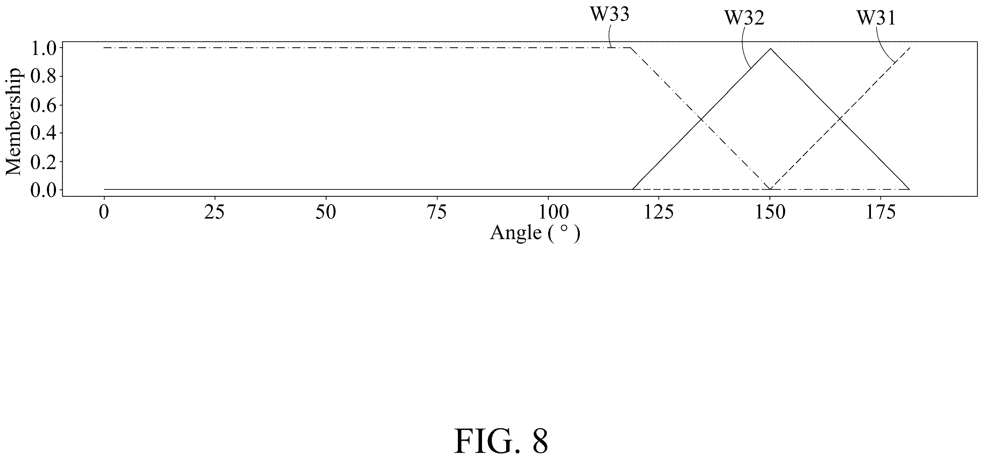

FIG. 8 illustrates a schematic diagram of the membership functions corresponding to the angle set according to an embodiment. Please refer to FIG. 8. In FIG. 8, the waveform W31 is the membership function *µAW*(*x*) corresponding to the large-angle set, as shown in Equation 10. The waveform W32 is the membership function *µAI*(*x*) corresponding to the medium-angle set, as shown in Equation 11. The waveform W33 is the membership function *µAN*(*x*) corresponding to the small-angle set, as shown in Equation 12.

Next, the first control unit 20 performs fuzzification on the relative speed S, the relative distance D, and the relative angle A based on the membership functions to obtain a plurality of membership values corresponding to the membership functions (step S03). In some embodiments, the membership values comprise a plurality of speed membership values, a plurality of distance membership values, and a plurality of angle membership values. In some embodiments, the first control unit 20 substitutes the value of the relative speed S into the membership function *µSF*(*x*) corresponding to the high-speed set, the membership function *µSM*(*x*) corresponding to the medium-speed set, and the membership function *µSS*(*x*) corresponding to the low-speed set to obtain the speed membership values. In some embodiments, the first control unit 20 substitutes the value of the relative distance D into the membership function *µDFr*(*x*) corresponding to the far-distance set, the membership function *µDMr*(*x*) corresponding to the medium-distance set, and the membership function *µDC*(*x*) corresponding to the near-distance set to obtain the distance membership values. In some embodiments, the first control unit 20 substitutes the value of the relative angle A into the membership function *µAW*(*x*) corresponding to the large-angle set, the membership function *µAI*(*x*) corresponding to the medium-angle set, and the membership function *µAN*(*x*) corresponding to the small-angle set to obtain the angle membership values.

Next, the first control unit 20 defines a fuzzy rule (step S04). In step S04, the first control unit 20 first defines a speed parameter, a distance parameter, and an angle parameter. In some embodiments, the speed parameter is divided into a plurality of speed levels. The speed levels comprise a high-speed level, a medium-speed level, and a low-speed level. The high-speed level corresponds to the high-speed set, the medium-speed level corresponds to the medium-speed set, and the low-speed level corresponds to the low-speed set. In some embodiments, the distance parameter is divided into a plurality of distance levels. The distance levels comprise a far-distance level, a medium-distance level, and a near-distance level. The far-distance level corresponds to the far-distance set, the medium-distance level corresponds to the medium-distance set, and the near-distance level corresponds to the near-distance set. In some embodiments, the angle parameter is divided into a plurality of angle levels. The angle levels comprise a large-angle level, a medium-angle level, and a small-angle level. The large-angle level corresponds to the large-angle set, the medium-angle level corresponds to the medium-angle set, and the small-angle level corresponds to the small-angle set. Next, the first control unit 20 defines an output adjustment degree based on the speed parameter, the distance parameter, and the angle parameter. In some embodiments, the output adjustment degree is divided into a plurality of output adjustment levels based on combinations of each of the speed levels, each of the distance levels, and each of the angle levels.

Table 1 shows an embodiment of the fuzzy rule. Please refer to Table 1.

**Table 1**

| Speed Parameter | Distance Parameter | Angle Parameter | Output Adjustment Degree |
|---|---|---|---|
| High-speed | Far-distance | Large-angle | Decrease More |
| High-speed | Far-distance | Medium-angle | Decrease |
| High-speed | Far-distance | Small-angle | Decrease |
| High-speed | Medium-distance | Large-angle | Decrease More |
| High-speed | Medium-distance | Medium-angle | Decrease |
| High-speed | Medium-distance | Small-angle | Decrease |
| High-speed | Near-distance | Large-angle | Decrease More |
| High-speed | Near-distance | Medium-angle | Decrease More |
| High-speed | Near-distance | Small-angle | Decrease |
| Medium-speed | Far-distance | Large-angle | Decrease |
| Medium-speed | Far-distance | Medium-angle | Decrease |
| Medium-speed | Far-distance | Small-angle | No Change |
| Medium-speed | Medium-distance | Large-angle | Decrease More |
| Medium-speed | Medium-distance | Medium-angle | Decrease |
| Medium-speed | Medium-distance | Small-angle | No Change |
| Medium-speed | Near-distance | Large-angle | Decrease More |
| Medium-speed | Near-distance | Medium-angle | Decrease |
| Medium-speed | Near-distance | Small-angle | Decrease |
| Low-speed | Far-distance | Large-angle | Decrease |
| Low-speed | Far-distance | Medium-angle | No Change |
| Low-speed | Far-distance | Small-angle | Increase |
| Low-speed | Medium-distance | Large-angle | Decrease |
| Low-speed | Medium-distance | Medium-angle | No Change |
| Low-speed | Medium-distance | Small-angle | Increase |
| Low-speed | Near-distance | Large-angle | Decrease More |
| Low-speed | Near-distance | Medium-angle | Decrease More |
| Low-speed | Near-distance | Small-angle | Decrease More |

In Table 1, the speed parameter is divided into the high-speed level, the medium-speed level, and the low-speed level as described above. The distance parameter is divided into the far-distance level, the medium-distance level, and the near-distance level as described above. The angle parameter is divided into the large-angle level, the medium-angle level, and the small-angle level as described above. The output adjustment degree is divided into the output adjustment levels, namely "Increase," "No Change," "Decrease," and "Decrease More," based on the combinations of each of the speed levels (i.e., the high-speed level, the medium-speed level, and the low-speed level), each of the distance levels (i.e., the far-distance level, the medium-distance level, and the near-distance level), and each of the angle levels (i.e., the large-angle level, the medium-angle level, and the small-angle level).

Next, the first control unit 20 calculates a plurality of fuzzy output values based on the relative speed S, the relative distance D, the relative angle A, the fuzzy rule, and the membership values (step S05). In step S05, the first control unit 20 first determines the output adjustment levels applicable to the target object based on the relative speed S, the relative distance D, and the relative angle A. Then, the first control unit 20 calculates the fuzzy output values based on each of the output adjustment levels applicable to the target object and the membership values.

In some embodiments, the first control unit 20 selects the speed membership value corresponding to the high-speed set, the medium-speed set, or the low-speed set as a first comparison membership value, based on each of the speed levels corresponding to a corresponding one of the output adjustment levels applicable to the target object. The first control unit 20 selects the distance membership value corresponding to the far-distance set, the medium-distance set, or the near-distance set as a second comparison membership value, based on each of the distance levels corresponding to a corresponding one of the output adjustment levels applicable to the target object. The first control unit 20 selects the angle membership value corresponding to the large-angle set, the medium-angle set, or the small-angle set as a third comparison membership value, based on each of the angle levels corresponding to a corresponding one of the output adjustment levels applicable to the target object. In some embodiments, the first control unit 20 takes a minimum value among the first comparison membership value, the second comparison membership value, and the third comparison membership value as the fuzzy output value.

Next, the first control unit 20 performs defuzzification on the fuzzy output values based on defuzzification formulas to obtain a light-on adjustment time and a light-off adjustment frame count (step S06). In some embodiments, the defuzzification formulas are expressed as Equation 13 and Equation 14.
$T = \frac{{\sum }_{i} {μ}_{i} ⋅ {y}_{i}}{{\sum }_{i} {μ}_{i}}$ (Equation 13)
$F = \frac{{\sum }_{i} {μ}_{i} ⋅ {y}_{i}}{{\sum }_{i} {μ}_{i}}$ (Equation 14)

In Equation 13 and Equation 14, *µᵢ* is the i-th fuzzy output value, *yᵢ* is a user-defined time interval variation value corresponding to the i-th fuzzy output value, *T* is the light-on adjustment time, and F is the light-off adjustment frame count. In some embodiments, the user-defined time interval variation value *yᵢ* is defined based on the output adjustment level applicable to the target object corresponding to the fuzzy output value. In some embodiments, the user-defined time interval variation value is 1 second (s) for the output adjustment level "Increase", 0 s for "No Change", -1 s for "Decrease", and -2 s for "Decrease More", however, the present disclosure is not limited to these specific ranges.

Finally, the first control unit 20 obtains the final light-on time based on a current light-on time and the light-on adjustment time, and obtains the final light-off frame count based on a current light-off frame count and the light-off adjustment frame count. In some embodiments, the first control unit 20 adds the current light-on time to the light-on adjustment time to obtain the final light-on time. In some embodiments, the first control unit 20 adds the current light-off frame count to the light-off adjustment frame count to obtain the final light-off frame count. In some embodiments, the current light-on time and the current light-off frame count are user-defined.

In some embodiments, when the final light-off frame count is a non-integer, the first control unit 20 rounds the final light-off frame count to the nearest integer.

An example of the fuzzy computation procedure is described below. In this example, it is assumed that the target object is approaching the vehicle in which the headlight variation control system 1 is implemented. The relative speed S of the target object is 80 km/h, the relative distance D is 50 m, the relative angle A is 170°, the current light-on time is 3 seconds (s), and the current light-off frame count is 3 frames. First, the first control unit 20 defines the fuzzy sets based on the number of intervals being 3 (step S01). In some embodiments, the fuzzy sets are divided into the speed set, the distance set, and the angle set, as described above. In some embodiments, the speed set is divided into the high-speed set, the medium-speed set, and the low-speed set, as described above. In some embodiments, the distance set is divided into the far-distance set, the medium-distance set, and the near-distance set, as described above. In some embodiments, the angle set is divided into the large-angle set, the medium-angle set, and the small-angle set, as described above. The high-speed set is defined as 90 km/h to 120 km/h, the medium-speed set is defined as 60 km/h to 90 km/h, and the low-speed set is defined as below 60 km/h. The far-distance set is defined as 70 m to 90 m, the medium-distance set is defined as 40 m to 70 m, and the near-distance set is defined as below 40 m. The large-angle set is defined as 150° to 180°, the medium-angle set is defined as 120° to 150°, and the small-angle set is defined as 90° to 120°.

Next, the first control unit 20 defines the membership functions corresponding to the fuzzy sets (step S02). The first control unit 20 defines the membership function *µSF*(*x*) corresponding to the high-speed set as Equation 4. The first control unit 20 defines the membership function *µSM*(*x*) corresponding to the medium-speed set as Equation 5. The first control unit 20 defines the membership function *µSS*(*x*) corresponding to the low-speed set as Equation 6. The first control unit 20 defines the membership function *µDFR*(*x*) corresponding to the far-distance set as Equation 7. The first control unit 20 defines the membership function *µDMR*(*x*) corresponding to the medium-distance set as Equation 8. The first control unit 20 defines the membership function *µDC*(*x*) corresponding to the near-distance set as Equation 9. The first control unit 20 defines the membership function *µAW*(*x*) corresponding to the large-angle set as Equation 10. The first control unit 20 defines the membership function *µAI*(*x*) corresponding to the medium-angle set as Equation 11. The first control unit 20 defines the membership function *µAN*(*x*) corresponding to the small-angle set as Equation 12.

Next, the first control unit 20 performs fuzzification on the relative speed S, the relative distance D, and the relative angle A based on the membership functions to obtain the membership values corresponding to the membership functions (step S03). The membership values comprise the speed membership values, the distance membership values, and the angle membership values. In this example, the first control unit 20 substitutes the value of the relative speed S (i.e., 80 km/h) into the membership function *µSF*(*x*) corresponding to the high-speed set, the membership function *µSM*(*x*) corresponding to the medium-speed set, and the membership function *µSS*(*x*) corresponding to the low-speed set to obtain the speed membership values. The speed membership value obtained from *µSF*(*x*) is 0. The speed membership value obtained from *µSM*(*x*) is 0.67 ((80 - 60) / (90 - 60) = 20 / 30 = 0.67). The speed membership value obtained from *µSS*(*x*) is 0.33 ((80 - 60) / (90 - 60) = 10 / 30 = 0.33). The first control unit 20 substitutes the value of the relative distance D (i.e., 50 m) into the membership function *µDFR*(*x*) corresponding to the far-distance set, the membership function *µDMR*(*x*) corresponding to the medium-distance set, and the membership function *µDC*(*x*) corresponding to the near-distance set to obtain the distance membership values. The distance membership value obtained from *µDFR*(*x*) is 0. The distance membership value obtained from *µDMR*(*x*) is 0.33 ((50 - 40) / (70 - 40) = 10 / 30 = 0.33). The distance membership value obtained from *µDC*(*x*) is 0.67 ((70 - 50) / (40 - 10) = 20 / 30 = 0.67). The first control unit 20 substitutes the value of the relative angle A (i.e., 170°) into the membership function *µAW*(*x*) corresponding to the large-angle set, the membership function *µAI*(*x*) corresponding to the medium-angle set, and the membership function *µAN*(*x*) corresponding to the small-angle set to obtain the angle membership values. The angle membership value obtained from *µAW*(*x*) is 0.33 ((180 - 170) / (150 - 120) = 10 / 30 = 0.33). The angle membership value obtained from *µAI*(*x*) is 0.33 ((180 - 170) / (150 - 120) = 50 / 30 = 0.33). The angle membership value obtained from *µAN*(*x*) is 0.

Next, the first control unit 20 defines the fuzzy rule (step S04). In this example, the first control unit 20 defines the fuzzy rule as shown in Table 1.

Next, the first control unit 20 calculates the fuzzy output values based on the relative speed S, the relative distance D, the relative angle A, the fuzzy rule, and the membership values (step S05). In step S05, first, the first control unit 20 determines the output adjustment levels applicable to the target object based on the relative speed S, the relative distance D, and the relative angle A. In this example, since the target object is approaching the vehicle in which the headlight variation control system 1 is implemented, and the relative speed S of the target object is 80 km/h (medium-speed), the relative distance D is 50 m (medium-distance), and the relative angle A is 170° (large-angle), in the following time period, the relative speed of the target object with respect to the vehicle will remain medium-speed, the relative distance will change from medium-distance to near-distance, and the relative angle will change from large-angle to medium-angle. Therefore, the output adjustment levels applicable to the target object comprise: Decrease More (medium-speed, medium-distance, and large-angle), Decrease (medium-speed, medium-distance, and medium-angle), Decrease More (medium-speed, near-distance, and large-angle), and Decrease (medium-speed, near-distance, and medium-angle).

Next, the first control unit 20 calculates the fuzzy output values based on each of the output adjustment levels applicable to the target object and the membership values. In this example, the first control unit 20 selects 0.67 (medium-speed) as the first comparison membership value corresponding to the output adjustment level of Decrease More (medium-speed, medium-distance, and large-angle), selects 0.33 (medium-distance) as the second comparison membership value corresponding to the output adjustment level of Decrease More (medium-speed, medium-distance, and large-angle), and selects 0.33 (large-angle) as the third comparison membership value corresponding to the output adjustment level of Decrease More (medium-speed, medium-distance, and large-angle). The first control unit 20 takes the minimum of 0.67, 0.33, and 0.33, which is 0.33, as the fuzzy output value corresponding to the output adjustment level of Decrease More (medium-speed, medium-distance, and large-angle). The first control unit 20 selects 0.67 (medium-speed) as the first comparison membership value corresponding to the output adjustment level of Decrease (medium-speed, medium-distance, and medium-angle), selects 0.33 (medium-distance) as the second comparison membership value corresponding to the output adjustment level of Decrease (medium-speed, medium-distance, and medium-angle), and selects 0.33 (medium-angle) as the third comparison membership value corresponding to the output adjustment level of Decrease (medium-speed, medium-distance, and medium-angle). The first control unit 20 takes the minimum of 0.67, 0.33, and 0.33, which is 0.33, as the fuzzy output value corresponding to the output adjustment level of Decrease (medium-speed, medium-distance, and medium-angle). The first control unit 20 selects 0.67 (medium-speed) as the first comparison membership value corresponding to the output adjustment level of Decrease More (medium-speed, near-distance, and large-angle), selects 0.67 (near-distance) as the second comparison membership value corresponding to the output adjustment level of Decrease More (medium-speed, near-distance, and large-angle), and selects 0.33 (large-angle) as the third comparison membership value corresponding to the output adjustment level of Decrease More (medium-speed, near-distance, and large-angle). The first control unit 20 takes the minimum of 0.67, 0.67, and 0.33, which is 0.33, as the fuzzy output value corresponding to the output adjustment level of Decrease More (medium-speed, near-distance, and large-angle). The first control unit 20 selects 0.67 (medium-speed) as the first comparison membership value corresponding to the output adjustment level of Decrease (medium-speed, near-distance, and medium-angle), selects 0.67 (near-distance) as the second comparison membership value corresponding to the output adjustment level of Decrease (medium-speed, near-distance, and medium-angle), and selects 0.33 (medium-angle) as the third comparison membership value corresponding to the output adjustment level of Decrease (medium-speed, near-distance, and medium-angle). The first control unit 20 takes the minimum of 0.67, 0.67, and 0.33, which is 0.33, as the fuzzy output value corresponding to the output adjustment level of Decrease (medium-speed, near-distance, and medium-angle).

Next, the first control unit 20 performs defuzzification on the fuzzy output values based on the defuzzification formulas as shown in Equation 13 and Equation 14 to obtain the light-on adjustment time and the light-off adjustment frame count (step S06). In this example, the user-defined time interval variation value corresponding to the output adjustment level of Increase is, as described above, 1 second (s); the user-defined time interval variation value corresponding to the output adjustment level of No Change is, as described above, 0 s; the user-defined time interval variation value corresponding to the output adjustment level of Decrease is, as described above, -1 s; and the user-defined time interval variation value corresponding to the output adjustment level of Decrease More is, as described above, -2 s. Accordingly, the light-on adjustment time based on the defuzzification formula as shown in Equation 13 is -1.98 (s), that is, ((0.33×-2)+(0.33×-1)+(0.33×-2)+(0.33×-1)) / (0.33+0.33+0.33+0.33) = (-0.66-0.33-0.66-0.33) / (0.33×4 ≈ 1) = -1.98 / 1 = -1.98. The light-off adjustment frame count based on the defuzzification formula as shown in Equation 14 is -1.98 (frame), that is, ((0.33×-2)+(0.33×-1)+(0.33×-2)+(0.33×-1)) / (0.33+0.33+0.33+0.33) = (-0.66-0.33-0.66-0.33) / (0.33×4 ≈ 1) = -1.98 / 1 = -1.98.

Finally, the first control unit 20 obtains the final light-on time based on the current light-on time and the light-on adjustment time and obtains the final light-off frame count based on the current light-off frame count and the light-off adjustment frame count. The first control unit 20 adds the current light-on time (i.e., 3 seconds) and the light-on adjustment time (i.e., -1.98 seconds) to obtain the final light-on time of 1.02 seconds. The first control unit 20 adds the current light-off frame count (i.e., 3 frames) and the light-off adjustment frame count (i.e., -1.98 frames) to obtain the final light-off frame count of 1.02 frames. Since the final light-off frame count (i.e., 1.02 frames) is not an integer, the first control unit 20 rounds the final light-off frame count to an integer (1.02 ≈ 1) so that the final light-off frame count becomes 1 frame.

The first driving unit 30 is configured to control the first lighting module 40 based on the first light adjustment instruction C1. That is, in some embodiments, the first driving unit 30 controls the first lighting module 40 based on the final light-on time and the final light-off frame count.

In some embodiments, the target object information further comprises a relative position P of the target object. The computing unit 13 is further configured to calculate the relative position P of the target object based on the first information I1 and the second information I2. In some embodiments, the first light adjustment instruction C1 further comprises the relative position P.

In some embodiments, the first driving unit 30 is a matrix driver. The first lighting module 40 is an LED matrix. In some embodiments, the first driving unit 30 is further configured to control switching of a plurality of LEDs in the first lighting module 40 corresponding to the relative position P based on the first light adjustment instruction C1.

In some embodiments, the LED matrix layout of the first lighting module 40 is designed based on vehicle manufacturer requirements and regulatory constraints (such as the R48 and R123 regulations), and the brightness distribution and illumination range are also considered during the design. In some embodiments, a final imaging length of the first lighting module 40 is determined based on an illumination angle and a pixel coverage range, as shown in Equation 15.
$L = 2 ∗ d ∗ tan \left(\frac{θ}{2}\right)$ (Equation 15)

In Equation 15, L represents the imaging length, d represents the distance, and θ represents the emission angle. In some embodiments, the first lighting module 40 adopts an LED matrix with an emission angle of 30 degrees. In some embodiments, the first lighting module 40 adopts a 22-row × 4-column matrix. In some embodiments, based on the emission angle adopted by the first lighting module 40 and the type of matrix adopted by the first lighting module 40, a coverage range of each of the pixels in the first lighting module 40 at different distances can be calculated.

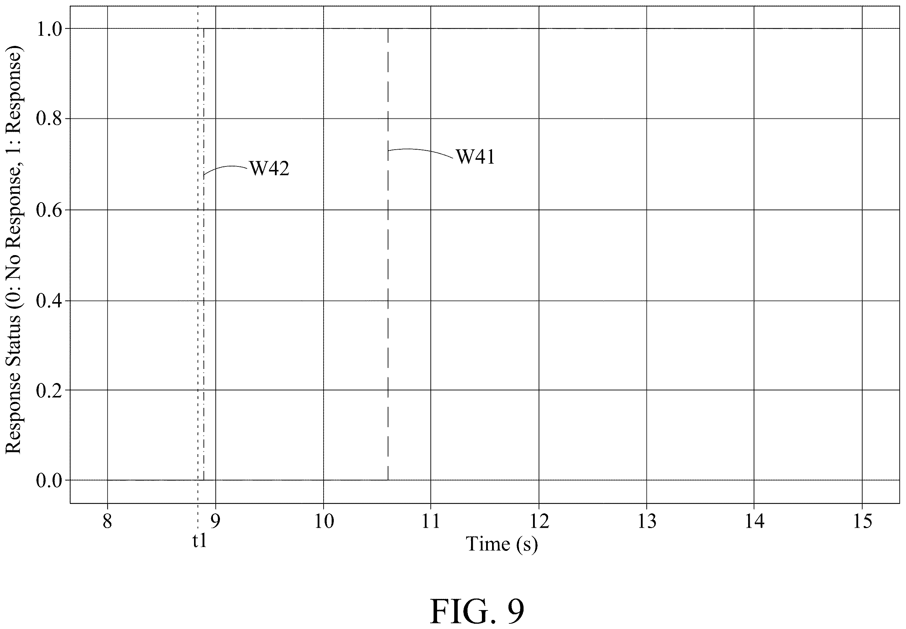

FIG. 9 illustrates a waveform diagram of reaction times of a conventional ADB system and the headlight variation control system 1 according to an embodiment. Please refer to FIG. 9. The target object appears at the 8.8th second (i.e., at time point t1). The waveform W41 represents the reaction time of the conventional ADB system, and the waveform W42 represents the reaction time of the headlight variation control system 1. As can be seen from the waveform W41 and the waveform W42, the conventional ADB system does not react to the target object (e.g., by turning off the lighting of the area at the position of the target object) until the time reaches 10.62nd second. However, the headlight variation control system 1 reacts to the target object at the 8.91st second. In other words, the headlight variation control system 1 has a faster reaction speed compared to the conventional ADB system.

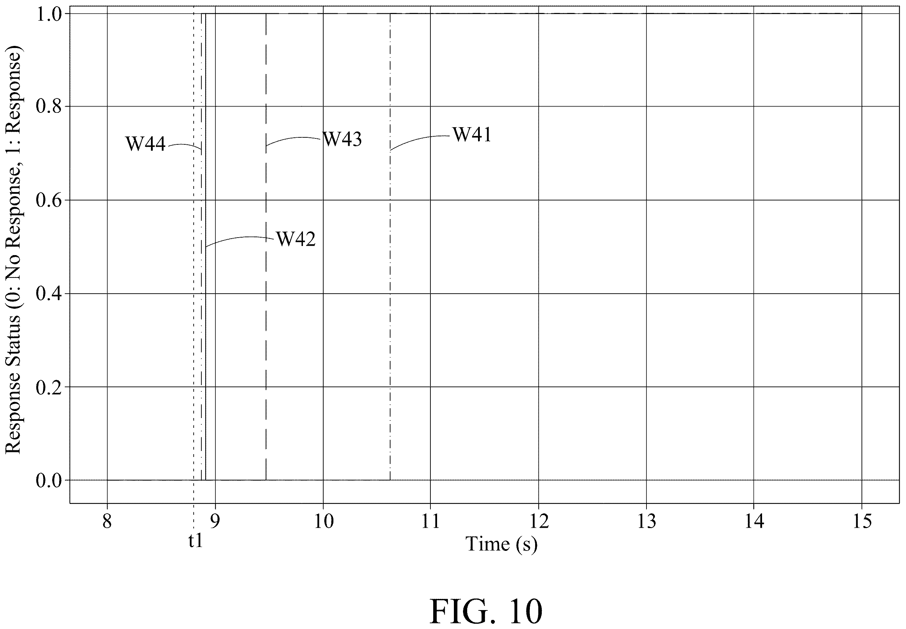

FIG. 10 illustrates a waveform diagram of the reaction times of the conventional ADB system and the headlight variation control system 1 with different interval numbers according to an embodiment. Please refer to FIG. 10. The waveform W41 represents the reaction time of the conventional ADB system. The waveform W42 represents the reaction time of the headlight variation control system 1 with an interval number of 3. The waveform W43 represents the reaction time of the headlight variation control system 1 with an interval number of 2. The waveform W44 represents the reaction time of the headlight variation control system 1 with an interval number of 5. As can be seen from the waveform W41, the waveform W42, the waveform W43, and the waveform W44, regardless of the interval number of the headlight variation control system 1, the reaction speed of the headlight variation control system 1 is faster than that of the conventional ADB system. Furthermore, as can be seen from the waveform W42 and the waveform W44, although the headlight variation control system 1 with an interval number of 5 exhibits a faster reaction speed compared to the headlight variation control system 1 with an interval number of 3, the improvement is limited. Since the headlight variation control system 1 with an interval number of 5 has a larger interval number, the computation load increases, which causes the overall system to become more sensitive and unstable and places a greater burden on the computing performance of the first control unit 20. The positive effect of the improved reaction speed does not outweigh the negative effects resulting from the increased interval number. Therefore, in some preferable embodiments, the interval number of the headlight variation control system 1 is 3.

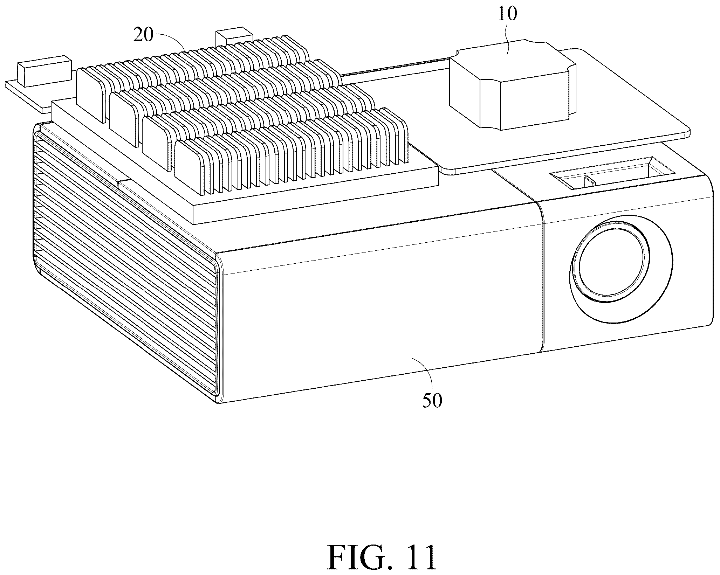

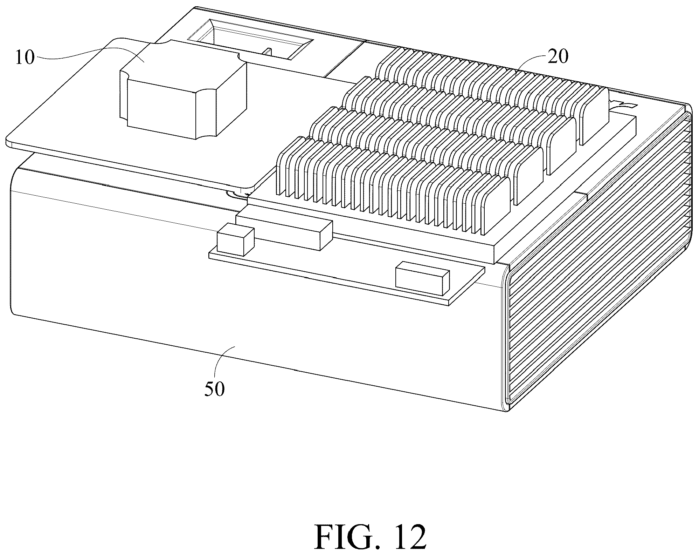

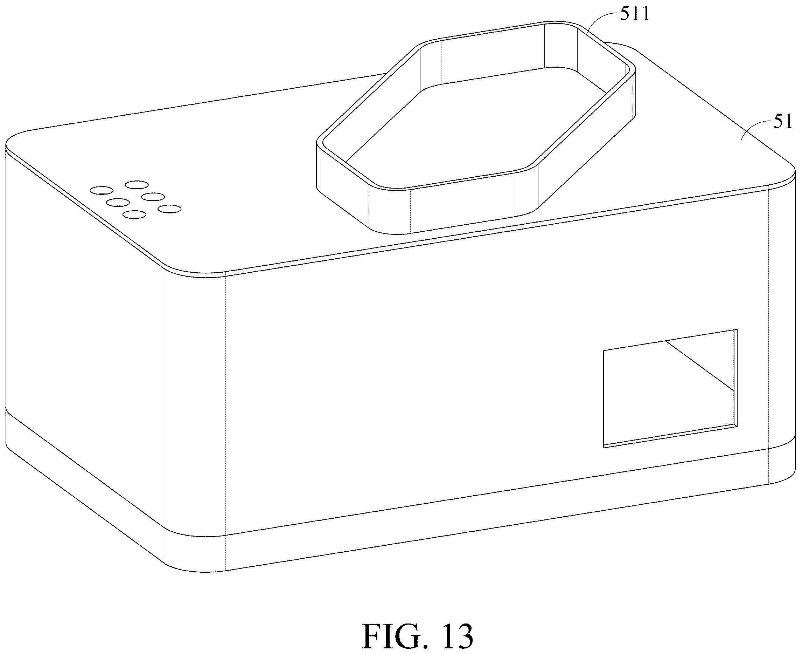

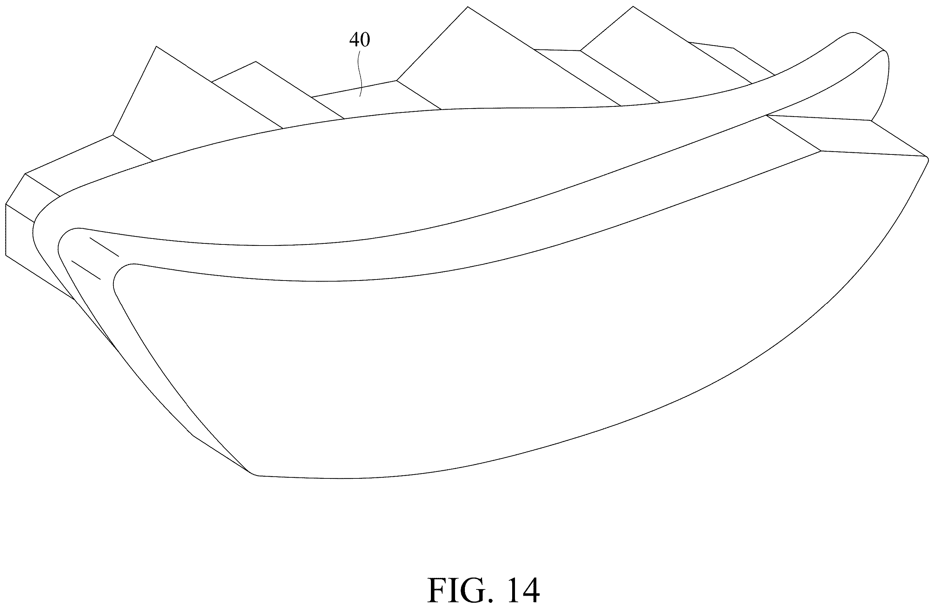

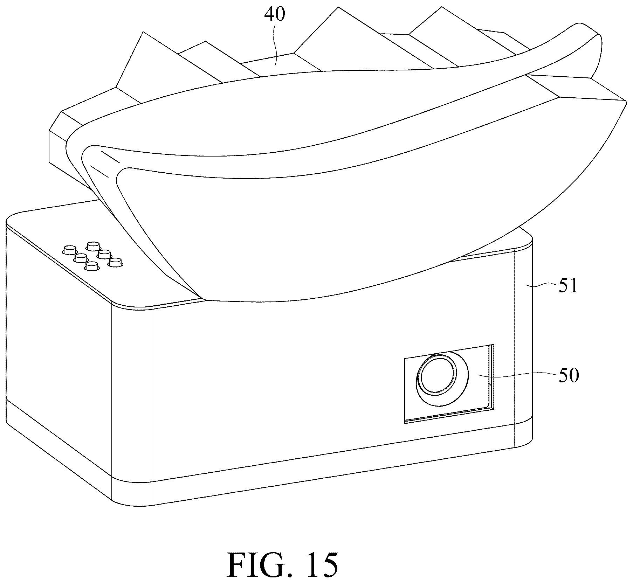

FIG. 11 illustrates a front schematic diagram of a projector 50 according to an embodiment. FIG. 12 illustrates a rear schematic diagram of the projector 50 according to an embodiment. FIG. 13 illustrates a schematic diagram of an installation device 51 according to an embodiment. FIG. 14 illustrates a schematic diagram of the first lighting module 40 according to an embodiment. Please refer to FIGs. 11 to 14. In some embodiments, the detection device 10 and the first control unit 20 are disposed on the projector 50. In some embodiments, the detection device 10 disposed on the projector 50 may be but not limited to a Surround View System chip. In some embodiments, the first control unit 20 disposed on the projector 50 may be but not limited to an Electronic Control Unit (ECU). In some embodiments, the installation device 51 is configured to accommodate the projector 50, which is provided with the detection device 10 and the first control unit 20. In some embodiments, the installation device 51 further comprises an install base 511. The install base 511 is configured to install the first lighting module 40 on the installation device 51. FIG. 15 illustrates a schematic diagram of the projector 50 and the first lighting module 40 installed on the installation device 51 according to an embodiment. Please refer to FIG. 15. In FIG. 15, the projector 50 provided with the detection device 10 and the first control unit 20 is, as described above, installed inside the installation device 51, and the first lighting module 40 is also, as described above, installed on the installation device 51 via the install base 511. In some embodiments, the first driving unit 30 is integrated into the installation device 51. In some embodiments, when the projector 50 provided with the detection device 10 and the first control unit 20 is installed inside the installation device 51, and the first lighting module 40 is installed on the installation device 51 via the install base 511, the first driving unit 30 integrated into the installation device 51 is electrically connected to the first control unit 20 and the first lighting module 40. In some embodiments, the detection device 10 disposed on the projector 50 is configured to detect images projected by the projector 50 to acquire target object information.

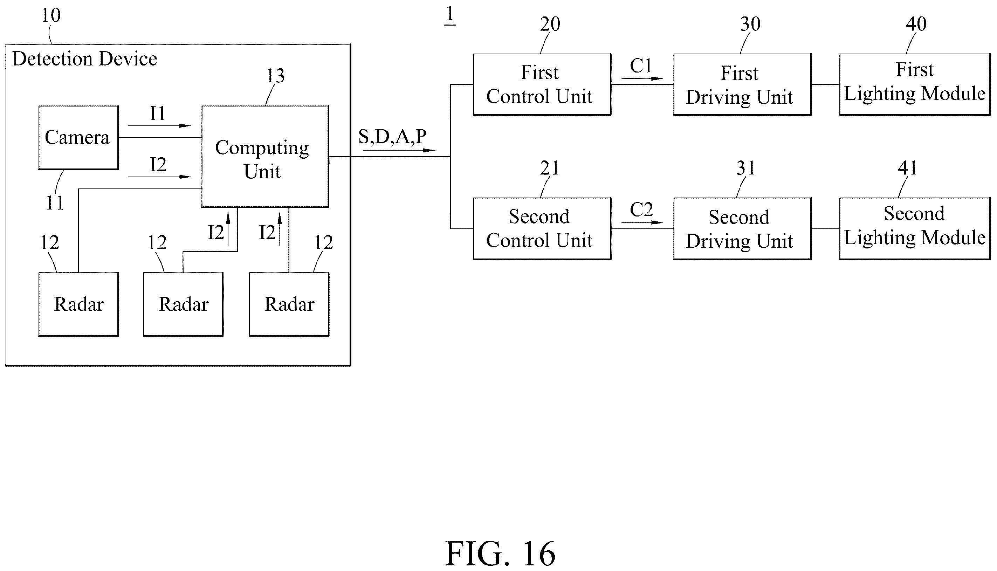

FIG. 16 illustrates a schematic diagram of the headlight variation control system 1 according to another embodiment. Please refer to FIG. 16. In some embodiments, the headlight variation control system 1 further comprises a second control unit 21 and a second driving unit 31. The second control unit 21 is configured to perform the fuzzy computation procedure based on the relative speed S, the relative distance D, and the relative angle A to obtain a second light adjustment instruction C2. The second driving unit 31 is configured to control a second lighting module 41 based on the second light adjustment instruction C2. In some embodiments, the first lighting module 40 is a left high-beam headlight, and the second lighting module 41 is a right high-beam headlight.

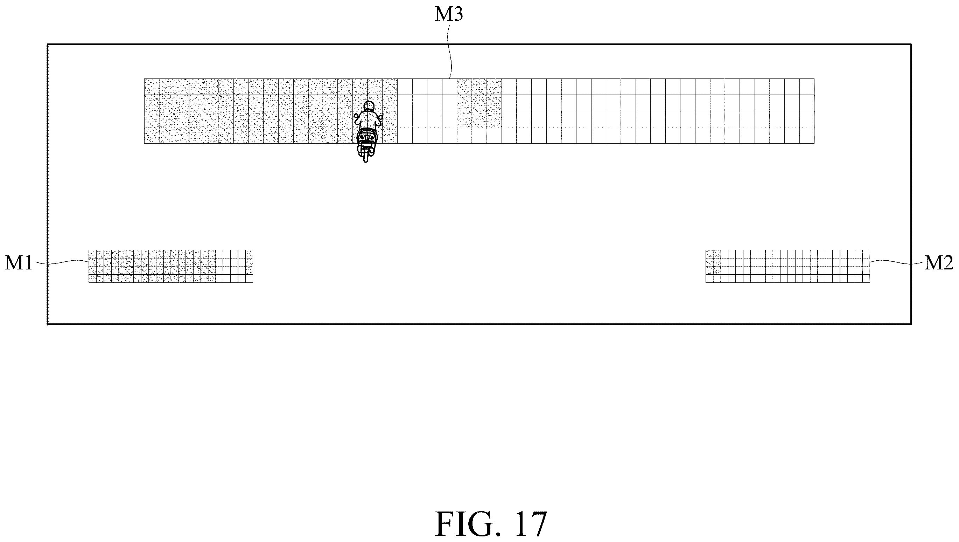

In some embodiments, the second driving unit 31 is a matrix driver. The second lighting module 41 is an LED matrix. In some embodiments, the second lighting module 41 adopts a 22-row × 4-column matrix. FIG. 17 illustrates a schematic diagram of the first lighting module 40 and the second lighting module 41 according to an embodiment. Please refer to FIG. 17. In FIG. 17, the first lighting module 40 and the second lighting module 41 are the LED matrices adopting the 22-row × 4-column configuration, as described above. The matrix M1 is the LED matrix of the first lighting module 40. The matrix M2 is the LED matrix of the second lighting module 41. Each of the cells in the matrix M1 and the matrix M2 corresponds to one LED, where a bright cell indicates that the LED is in an ON state, and a dark cell indicates that the LED is in an OFF state. The matrix M3, which combines the matrix M1 and the matrix M2, is formed when the first lighting module 40 and the second lighting module 41 are used as a whole.

To sum up, in some embodiments, the headlight variation control system 1 has a faster reaction speed compared to the conventional ADB system, thereby allowing it to respond quickly to changing driving environments and improving driving safety and comfort. When an oncoming vehicle approaches, the headlight variation control system 1 can also reduce the light brightness in real time, thereby reducing the risk of accidents. In some embodiments, the headlight variation control system 1 can automatically adjust the light control strategy based on the combination of multiple variables such as the relative speed S, the relative distance D, and the relative angle A, which exhibits its excellent adaptability and its capability to deal with complex road conditions. Meanwhile, in some embodiments, the application of the fuzzy rule enables the first control unit 20 to produce smoother outputs, which effectively reduces the problem of overadjustment to the headlight and further improves driving comfort. In addition, effective control of the lighting can be achieved can be achieved by the fuzzy logic control design which does not require an accurate mathematical model and only requires the fuzzy rule to be designed based on empirical rules, which reduces the difficulty of designing the headlight variation control system 1.

## Claims

1. A headlight variation control system (1), comprising:
a detection device (10) configured to acquire target object information;
a first control unit (20) configured to perform a fuzzy computation procedure based on the target object information to generate a first light adjustment instruction (C1); and
a first driving unit (30) configured to control a first lighting module (40) based on the first light adjustment instruction (C1).

2. The headlight variation control system (1) according to claim 1, wherein the target object information comprises a relative speed (S), a relative distance (D), and a relative angle (A) of a target object, and the detection device (10) comprises:
a camera (11) configured to capture an image of the target object to provide first information (I1);
at least one radar (12) configured to detect the target object to provide second information (I2); and
a computing unit (13) configured to calculate the relative speed (S), the relative distance (D), and the relative angle (A) of the target object based on the first information (I1) and the second information (I2).

3. The headlight variation control system (1) according to any of claims 1 and 2, wherein the first light adjustment instruction (C1) comprises a final light-on time and a final light-off frame count, and the fuzzy computation procedure comprises:
defining a plurality of fuzzy sets;
defining a plurality of membership functions corresponding to the fuzzy sets;
performing fuzzification on the relative speed (S), the relative distance (D), and the relative angle (A) based on the membership functions to obtain a plurality of membership values corresponding to the membership functions;
defining a fuzzy rule;
calculating a plurality of fuzzy output values based on the relative speed (S), the relative distance (D), the relative angle (A), the fuzzy rule, and the membership values;
performing defuzzification on the fuzzy output values based on defuzzification formulas to obtain a light-on adjustment time and a light-off adjustment frame count;
obtaining the final light-on time based on a current light-on time and the light-on adjustment time; and
obtaining the final light-off frame count based on a current light-off frame count and the light-off adjustment frame count.

4. The headlight variation control system (1) according to any of claims 1-3, wherein the fuzzy sets comprise a speed set, a distance set, and an angle set, the speed set comprises a high-speed set, a medium-speed set, and a low-speed set, the distance set comprises a far-distance set, a medium-distance set, and a near-distance set, the angle set comprises a large-angle set, a medium-angle set, and a small-angle set, and each of the membership functions is a triangular membership function or a linear membership function.

5. The headlight variation control system (1) according to any of claim 1-4, wherein the step of defining the membership functions corresponding to the fuzzy sets comprises:
defining the membership function corresponding to the high-speed set as the linear membership function;
defining the membership function corresponding to the medium-speed set as the triangular membership function;
defining the membership function corresponding to the low-speed set as the linear membership function;
defining the membership function corresponding to the far-distance set as the linear membership function;
defining the membership function corresponding to the medium-distance set as the triangular membership function;
defining the membership function corresponding to the near-distance set as the linear membership function;
defining the membership function corresponding to the large-angle set as the linear membership function;
defining the membership function corresponding to the medium-angle set as the triangular membership function; and
defining the membership function corresponding to the small-angle set as the linear membership function.

6. The headlight variation control system (1) according to any of claims 1-5, wherein the membership values comprise a plurality of speed membership values, a plurality of distance membership values, and a plurality of angle membership values, and the step of performing fuzzification on the relative speed (S), the relative distance (D), and the relative angle (A) based on the membership functions to obtain the membership values corresponding to the membership functions comprises:
substituting the value of the relative speed (S) into the membership functions corresponding to the high-speed set, the medium-speed set, and the low-speed set to obtain the speed membership values;
substituting the value of the relative distance (D) into the membership functions corresponding to the far-distance set, the medium-distance set, and the near-distance set to obtain the distance membership values; and
substituting the value of the relative angle (A) into the membership functions corresponding to the large-angle set, the medium-angle set, and the small-angle set to obtain the angle membership values.

7. The headlight variation control system (1) according to any of claims 1-6, wherein the step of defining the fuzzy rule comprises:
defining a speed parameter, wherein the speed parameter is divided into a plurality of speed levels, the speed levels comprise a high-speed level, a medium-speed level, and a low-speed level, the high-speed level corresponds to the high-speed set, the medium-speed level corresponds to the medium-speed set, and the low-speed level corresponds to the low-speed set;
defining a distance parameter, wherein the distance parameter is divided into a plurality of distance levels, the distance levels comprise a far-distance level, a medium-distance level, and a near-distance level, the far-distance level corresponds to the far-distance set, the medium-distance level corresponds to the medium-distance set, and the near-distance level corresponds to the near-distance set;
defining an angle parameter, wherein the angle parameter is divided into a plurality of angle levels, the angle levels comprise a large-angle level, a medium-angle level, and a small-angle level, the large-angle level corresponds to the large-angle set, the medium-angle level corresponds to the medium-angle set, and the small-angle level corresponds to the small-angle set; and
defining an output adjustment degree based on the speed parameter, the distance parameter, and the angle parameter, and the output adjustment degree is divided into a plurality of output adjustment levels based on combinations of each of the speed levels, each of the distance levels, and each of the angle levels.

8. The headlight variation control system (1) according to any of claims 1-7, wherein the step of calculating the fuzzy output values based on the relative speed (S), the relative distance (D), the relative angle (A), the fuzzy rule, and the membership values comprises:
determining the output adjustment levels applicable to the target object based on the relative speed (S), the relative distance (D), and the relative angle (A); and
calculating the fuzzy output values based on each of the output adjustment levels applicable to the target object and the membership values.

9. The headlight variation control system (1) according to any of claims 1-8, wherein the step of calculating the fuzzy output values based on each of the output adjustment levels applicable to the target object and the membership values comprises:
selecting the speed membership value corresponding to the high-speed set, the medium-speed set, or the low-speed set as a first comparison membership value based on each of the speed levels corresponding to a corresponding one of the output adjustment levels applicable to the target object;
selecting the distance membership value corresponding to the far-distance set, the medium-distance set, or the near-distance set as a second comparison membership value based on each of the distance levels corresponding to a corresponding one of the output adjustment levels applicable to the target object;
selecting the angle membership value corresponding to the large-angle set, the medium-angle set, or the small-angle set as a third comparison membership value based on each of the angle levels corresponding to a corresponding one of the output adjustment levels applicable to the target object; and
taking a minimum value among the first comparison membership value, the second comparison membership value, and the third comparison membership value as the fuzzy output value.

10. The headlight variation control system (1) according to any of claims 1-9, wherein the i-th fuzzy output value is *µᵢ*, a user-defined time interval variation value corresponding to the i-th fuzzy output value is *yᵢ*, the light-on adjustment time is *T,* the light-off adjustment frame count is F, and the defuzzification formulas are $T = \frac{{\sum }_{i} {μ}_{i} ⋅ {y}_{i}}{{\sum }_{i} {μ}_{i}}$ and $F = \frac{{\sum }_{i} {μ}_{i} ⋅ {y}_{i}}{{\sum }_{i} {μ}_{i}}$.

11. The headlight variation control system (1) according to any of claims 1-10, wherein the step of obtaining the final light-on time based on the current light-on time and the light-on adjustment time comprises:
adding the current light-on time to the light-on adjustment time to obtain the final light-on time.

12. A headlight variation control system (1), comprising:
a detection device (10) configured to acquire target object information;
a first control unit (20) configured to perform a fuzzy computation procedure based on the target object information to generate a first light adjustment instruction (C1);
a first driving unit (30) configured to control a first lighting module (40) based on the first light adjustment instruction (C1);
a second control unit (21) configured to perform the fuzzy computation procedure based on the target object information to generate a second light adjustment instruction (C2); and
a second driving unit (31) configured to control a second lighting module (41) based on the second light adjustment instruction (C2);
wherein the first lighting module (40) is a left high-beam headlight and the second lighting module (41) is a right high-beam headlight.

13. The headlight variation control system (1) according to claim 12, wherein the target object information comprises a relative speed (S), a relative distance (D), and a relative angle (A) of a target object, and the detection device (10) comprises:
a camera (11) configured to capture an image of the target object to provide first information (I1);
at least one radar (12) configured to detect the target object to provide second information (I2); and
a computing unit (13) configured to calculate the relative speed (S), the relative distance (D), and the relative angle (A) of the target object based on the first information (I1) and the second information (I2).

14. The headlight variation control system (1) according to any of claims 12 and 13, wherein each of the first light adjustment instruction (C1) and the second light adjustment instruction (C2) comprises a final light-on time and a final light-off frame count, and the fuzzy computation procedure comprises:
defining a plurality of fuzzy sets;
defining a plurality of membership functions corresponding to the fuzzy sets;
performing fuzzification on the relative speed (S), the relative distance (D), and the relative angle (A) based on the membership functions to obtain a plurality of membership values corresponding to the membership functions;
defining a fuzzy rule;
calculating a plurality of fuzzy output values based on the relative speed (S), the relative distance (D), the relative angle (A), the fuzzy rule, and the membership values;
performing defuzzification on the fuzzy output values based on defuzzification formulas to obtain a light-on adjustment time and a light-off adjustment frame count;
obtaining the final light-on time based on a current light-on time and the light-on adjustment time; and
obtaining the final light-off frame count based on a current light-off frame count and the light-off adjustment frame count.

15. A fuzzy computation procedure applicable to a headlight variation control system (1), comprising:
defining a plurality of fuzzy sets;
defining a plurality of membership functions corresponding to the fuzzy sets;
performing fuzzification on a relative speed (S), a relative distance (D), and a relative angle (A) based on the membership functions to obtain a plurality of membership values corresponding to the membership functions;
defining a fuzzy rule;
calculating a plurality of fuzzy output values based on the relative speed (S), the relative distance (D), the relative angle (A), the fuzzy rule, and the membership values;
performing defuzzification on the fuzzy output values based on a defuzzification formula to obtain a light-on adjustment time and a light-off adjustment frame count;
obtaining a final light-on time based on a current light-on time and the light-on adjustment time; and
obtaining a final light-off frame count based on a current light-off frame count and the light-off adjustment frame count.

## Amended claims

### Amended claims in accordance with Rule 137(2) EPC.

1. A headlight variation control system (1), comprising:
a detection device (10) configured to acquire target object information;
a first control unit (20) configured to perform a fuzzy computation procedure based on the target object information to generate a first light adjustment instruction (C1); and
a first driving unit (30) configured to control a first lighting module (40) based on the first light adjustment instruction (C1);
**characterized in that**:
the target object information comprises a relative speed (S), a relative distance (D), and a relative angle (A) of a target object, and the detection device (10) comprises:
a camera (11) configured to capture an image of the target object to provide first information (I1);
at least one radar (12) configured to detect the target object to provide second information (I2); and
a computing unit (13) configured to calculate the relative speed (S), the relative distance (D), and the relative angle (A) of the target object based on the first information (I1) and the second information (I2);
wherein the first light adjustment instruction (C1) comprises a final light-on time and a final light-off frame count, and the fuzzy computation procedure comprises:
defining a plurality of fuzzy sets;
defining a plurality of membership functions corresponding to the fuzzy sets;
performing fuzzification on the relative speed (S), the relative distance (D), and the relative angle (A) based on the membership functions to obtain a plurality of membership values corresponding to the membership functions;
defining a fuzzy rule;
calculating a plurality of fuzzy output values based on the relative speed (S), the relative distance (D), the relative angle (A), the fuzzy rule, and the membership values;
performing defuzzification on the fuzzy output values based on defuzzification formulas to obtain a light-on adjustment time and a light-off adjustment frame count;
obtaining the final light-on time based on a current light-on time and the light-on adjustment time; and
obtaining the final light-off frame count based on a current light-off frame count and the light-off adjustment frame count;
wherein the fuzzy sets comprise a speed set, a distance set, and an angle set, the speed set comprises a high-speed set, a medium-speed set, and a low-speed set, the distance set comprises a far-distance set, a medium-distance set, and a near-distance set, the angle set comprises a large-angle set, a medium-angle set, and a small-angle set, and each of the membership functions is a triangular membership function or a linear membership function;
wherein the membership values comprise a plurality of speed membership values, a plurality of distance membership values, and a plurality of angle membership values, and the step of performing fuzzification on the relative speed (S), the relative distance (D), and the relative angle (A) based on the membership functions to obtain the membership values corresponding to the membership functions comprises:
substituting the value of the relative speed (S) into the membership functions corresponding to the high-speed set, the medium-speed set, and the low-speed set to obtain the speed membership values;
substituting the value of the relative distance (D) into the membership functions corresponding to the far-distance set, the medium-distance set, and the near-distance set to obtain the distance membership values; and
substituting the value of the relative angle (A) into the membership functions corresponding to the large-angle set, the medium-angle set, and the small-angle set to obtain the angle membership values;
wherein the step of defining the fuzzy rule comprises:
defining a speed parameter, wherein the speed parameter is divided into a plurality of speed levels, the speed levels comprise a high-speed level, a medium-speed level, and a low-speed level, the high-speed level corresponds to the high-speed set, the medium-speed level corresponds to the medium-speed set, and the low-speed level corresponds to the low-speed set;
defining a distance parameter, wherein the distance parameter is divided into a plurality of distance levels, the distance levels comprise a far-distance level, a medium-distance level, and a near-distance level, the far-distance level corresponds to the far-distance set, the medium-distance level corresponds to the medium-distance set, and the near-distance level corresponds to the near-distance set;
defining an angle parameter, wherein the angle parameter is divided into a plurality of angle levels, the angle levels comprise a large-angle level, a medium-angle level, and a small-angle level, the large-angle level corresponds to the large-angle set, the medium-angle level corresponds to the medium-angle set, and the small-angle level corresponds to the small-angle set; and
defining an output adjustment degree based on the speed parameter, the distance parameter, and the angle parameter, and the output adjustment degree is divided into a plurality of output adjustment levels based on combinations of each of the speed levels, each of the distance levels, and each of the angle levels;
wherein the step of calculating the fuzzy output values based on the relative speed (S), the relative distance (D), the relative angle (A), the fuzzy rule, and the membership values comprises:
determining the output adjustment levels applicable to the target object based on the relative speed (S), the relative distance (D), and the relative angle (A); and
calculating the fuzzy output values based on each of the output adjustment levels applicable to the target object and the membership values;
wherein the i-th fuzzy output value is *µᵢ* , a user-defined time interval variation value corresponding to the i-th fuzzy output value is *yᵢ*, the light-on adjustment time is *T,* the light-off adjustment frame count is F, and the defuzzification formulas are $T = \frac{{\sum }_{i} {μ}_{i} ⋅ {y}_{i}}{{\sum }_{i} {μ}_{i}}$ and $F = \frac{{\sum }_{i} {μ}_{i} ⋅ {y}_{i}}{{\sum }_{i} {μ}_{i}}$;
wherein the step of obtaining the final light-on time based on the current light-on time and the light-on adjustment time comprises:
adding the current light-on time to the light-on adjustment time to obtain the final light-on time.

2. The headlight variation control system (1) according to claim 1, wherein the step of defining the membership functions corresponding to the fuzzy sets comprises:
defining the membership function corresponding to the high-speed set as the linear membership function;
defining the membership function corresponding to the medium-speed set as the triangular membership function;
defining the membership function corresponding to the low-speed set as the linear membership function;
defining the membership function corresponding to the far-distance set as the linear membership function;
defining the membership function corresponding to the medium-distance set as the triangular membership function;
defining the membership function corresponding to the near-distance set as the linear membership function;
defining the membership function corresponding to the large-angle set as the linear membership function;
defining the membership function corresponding to the medium-angle set as the triangular membership function; and
defining the membership function corresponding to the small-angle set as the linear membership function.

3. The headlight variation control system (1) according to any of claims 1-2, wherein the step of calculating the fuzzy output values based on each of the output adjustment levels applicable to the target object and the membership values comprises:
selecting the speed membership value corresponding to the high-speed set, the medium-speed set, or the low-speed set as a first comparison membership value based on each of the speed levels corresponding to a corresponding one of the output adjustment levels applicable to the target object;
selecting the distance membership value corresponding to the far-distance set, the medium-distance set, or the near-distance set as a second comparison membership value based on each of the distance levels corresponding to a corresponding one of the output adjustment levels applicable to the target object;
selecting the angle membership value corresponding to the large-angle set, the medium-angle set, or the small-angle set as a third comparison membership value based on each of the angle levels corresponding to a corresponding one of the output adjustment levels applicable to the target object; and
taking a minimum value among the first comparison membership value, the second comparison membership value, and the third comparison membership value as the fuzzy output value.

4. The headlight variation control system (1) according to any of claims 1-3, comprising:
a second control unit (21) configured to perform the fuzzy computation procedure based on the target object information to generate a second light adjustment instruction (C2); and
a second driving unit (31) configured to control a second lighting module (41) based on the second light adjustment instruction (C2);
wherein the first lighting module (40) is a left high-beam headlight and the second lighting module (41) is a right high-beam headlight.
